# EUROPÄISCHE PATENTANMELDUNG

(11) **EP 4 060 199 A1**
(43) Veröffentlichungstag der Anmeldung: **21.09.2022**
(21) Anmeldenummer: 22159866.7
(22) Anmeldetag: 03.03.2022
(51) Int. Cl.: F16B 31/02

(54) **VERFAHREN ZUM KALIBRIEREN EINES DREHMOMENTÜBERTRAGUNGSELEMENTS, SYSTEM MIT SOLCHEN DREHMOMENTÜBERTRAGUNGSELEMENTEN UND BEFESTIGUNGSELEMENT MIT EINEM SOLCHEN DREHMOMENTÜBERTRAGUNGSELEMENT**

(30) Priorität: 15.03.2021 DE 102021106170
(71) Anmelder: fischerwerke GmbH & Co. KG, 72178 Waldachtal (DE)
(72) Erfinder: Vogler, Falko, 77761 Schiltach (DE); Schilling, Sebastian, 72285 Pfalzgrafenweiler-Durrweiler (DE); Wälder, Jonas, 71069 Sindelfingen (DE); Salzer, Benedikt, 75365 Calw-Alzenberg (DE)
(74) Vertreter: Suchy, Ulrich Johannes

(57) **Zusammenfassung**

Zu einem Kalibrieren beispielsweise einer umlaufenden Nut (5) als Versagensstelle (6) einer Schraubenmutter (2) schlägt die Erfindung vor, einen Festigkeitskennwert, beispielsweise eine Härte der Schraubenmutter (2) oder eine Scherfestigkeit eines Rohlings, aus dem die Schraubenmutter (2) hergestellt wird, zu ermitteln und eine Geometrie der Versagensstelle (6), beispielsweise eine Tiefe der Nut (5), derart an den ermittelten Festigkeitskennwert anzupassen, dass die Versagensstelle (6) bei Überschreiten eines planmäßigen Drehmoments zerstört wird. Die Erfindung ermöglicht kleine Toleranzen des planmäßigen Drehmoments von ±5 % oder ±4 % und weniger.

## Beschreibung

Die Erfindung betrifft ein Verfahren zum Kalibrieren einer Versagensstelle eines Drehmomentübertragungselements zum Aufbringen eines planmäßigen Drehmoments auf ein Befestigungselement mit den Merkmalen des Oberbegriffs des Anspruchs 1. Des Weiteren betrifft die Erfindung ein System aus einer Vielzahl solcher Drehmomentübertragungselemente mit den Merkmalen des Oberbegriffs des Anspruchs 4 und ein Befestigungselement mit einem solchen Drehmomentübertragungselement mit den Merkmalen des Oberbegriffs des Anspruchs 8.

Die Patentschrift DE 26 35 805 C2 offenbart einen Spreizanker mit einem Ankerschaft, auf dessen Gewinde eine Schraubenmutter mit Kappe als Drehmomentübertragungselement geschraubt ist. Auf die Schraubenmutter ist die Kappe mit einem Außensechskant und einer zylindrischen Senkung, in der die Mutter einliegt, aufgesetzt. Die Schraubenmutter und die Kappe sind mit drei Scherstiften, die achsparallel um ein Mutterngewinde herum angeordnet sind, verbunden, die bei einem Überschreiten eines planmäßigen Drehmoments abscheren sollen.

Die Offenlegungsschrift DE 10 2016 124 789 A1 offenbart einen Spreizanker mit einem Ankerschaft, auf dessen Gewinde eine Schraubenmutter, hier in Form einer Abreißmutter, als Drehmomentübertragungselement geschraubt ist, die axial hintereinander zwei Außensechskante mit unterschiedlichen Schlüsselweiten aufweist. Zwischen den beiden Außensechskanten weist die Mutter eine umlaufende Nut auf, die eine Versagensstelle mit verringertem Querschnitt definiert, an der die Mutter abscheren soll, wenn ein planmäßiges Drehmoment überschritten ist.

Nachteilig an den bekannten Lösungen ist, dass Streuungen in den Festigkeitswerten des Materials, aus dem die Scherstifte beziehungsweise die Versagensstelle gebildet sind, sich direkt auf die Größe des Drehmoments auswirkt, das mit dem Drehmomentübertragungselement übertragen werden kann. Das tatsächlich mit dem Drehmomentübertragungselement übertragbare Drehmoment kann daher größer, gleich oder kleiner als das planmäßig zu übertragende Drehmoment sein. Erfahrungsgemäß können die Abweichungen vom planmäßigen Drehmoment bei identischer Geometrie der Drehmomentübertragungselemente allein aufgrund von Toleranzen der Materialkenngröße ±10 % und mehr betragen.

Aufgabe der Erfindung ist, eine Toleranz eines planmäßigen Drehmoments zu verkleinern, bei dem eine Versagensstelle eines Drehmomentübertragungselements versagt.

Diese Aufgabe wird erfindungsgemäß durch die Merkmale der Ansprüche 1, 4 und 8 gelöst. Die abhängigen Ansprüche haben vorteilhafte Ausgestaltungen und Weiterbildungen der unabhängigen Ansprüche zum Gegenstand.

Das erfindungsgemäße Verfahren zum Kalibrieren einer Versagensstelle eines Drehmomentübertragungselements zum Aufbringen eines planmäßigen Drehmoments auf ein Befestigungselement, beispielsweise in der Art einer Schraubenmutter, speziell in der Form einer Abreißmutter, oder einer Schraube mit den Merkmalen des Anspruchs 1 sieht vor, dass vor oder während einer Herstellung des Drehmomentübertragungselements eine Materialkenngröße, insbesondere eine Festigkeitskenngröße eines Rohlings, aus dem das Drehmomentübertragungselement oder jedenfalls die Versagensstelle beziehungsweise ein die Versagensstelle aufweisendes Teil des Drehmomentübertragungselements hergestellt wird, ermittelt wird. Erfindungsgemäß wird die Geometrie des Drehmomentübertragungselements, insbesondere die Geometrie der Versagensstelle, an die ermittelte Materialkenngröße des Rohlings, aus dem die Versagensstelle hergestellt wird, derart angepasst, dass die Versagensstelle ein Drehmoment bis zur Höhe des planmäßigen Drehmoments überträgt und bei einem Überschreiten des planmäßen Drehmoments versagt.

Beispielsweise wird bei einem Drehmomentübertragungselement, beispielsweise bei einer Abreißmutter aus Stahl, die Materialfestigkeit als Festigkeitskenngröße gemessen. Weist dabei der Rohling des Drehmomentübertragungselement beispielsweise eine höhere Festigkeit auf, als die, die für die Herstellung planmäßig vorgesehen war, wird der Querschnitt der Versagensstelle gegenüber einer planmäßigen Ausbildung derart reduziert beziehungsweise geschwächt, dass nur das planmäßige Drehmoment übertragen werden kann und die Versagensstelle bei Überschreiten des planmäßigen Drehmoments versagt, im Fall der Abreißmutter durch Abreißen des Mutternkopfs. Weist dagegen der Rohling, aus dem die Versagensstelle hergestellt wird, die planmäßige Festigkeit auf, so wird die Versagensstelle wie planmäßig vorgesehen ausgebildet. Wird die planmäßige Festigkeit unterschritten, so wird beispielsweise der Querschnitt der Versagensstelle gegenüber der planmäßigen Ausgestaltung entsprechend vergrößert, so dass das planmäßige Drehmoment übertragen werden kann, die Versagensstelle aber bei einem Überschreiten des planmäßigen Drehmoments versagt.

Das "planmäßige Drehmoment" ist das Drehmoment, das beim planmäßigen Befestigen eines Befestigungselements über die Versagensstelle vom Drehmomentübertragungselement auf das Befestigungselement übertragen werden, aber nicht unter- oder überschritten werden soll. Herstellungsbedingte Schwankungen des tatsächlich aufbringbaren Drehmoments, wie sie insbesondere aufgrund einer schwankenden Festigkeit des zur Herstellung des Drehmomentübertragungselements verwendeten Materials hervorgerufen werden, können durch das erfindungsgemäße Verfahren auf einen Wert reduziert werden, der weniger als ±5 %, insbesondere weniger als ±4 % vom gewünschten Wert abweicht. Drehmomente, die ±5 % oder weniger vom exakten Wert des planmäßigen Drehmoments abweichen, gelten im Sinne der Erfindung als "planmäßiges Drehmoment". Prinzipiell können die Abweichungen weiter auf ein Maß reduziert werden, das nur noch von der Messgenauigkeit bei der Ermittlung der Materialkenngröße und der Genauigkeit der geometrischen Anpassung abhängt.

Mit "Versagensstelle" ist hier der spezifische Ort gemeint, an dem das Versagen tatsächlich, beispielsweise durch Fließen des Materials oder einem Abreißen erfolgt. Die Versagensstelle ist derart geometrisch gestaltet, dass sie ein Drehmoment bis zur Höhe des planmäßigen Drehmoments vom Drehmomentübertragungselement auf das Befestigungselement überträgt und bei einem Überschreiten des planmäßigen Drehmoments versagt, insbesondere verformt und/oder zerstört wird, so dass kein Drehmoment oder allenfalls ein niedrigeres Drehmoment als das planmäßige Drehmoment vom Drehmomentübertragungselement auf das Befestigungselement übertragen werden kann.

Das Drehmomentübertragungselement, die Versagensstelle und das Befestigungselement können bis zum Versagen der Versagensstelle einstückig verbunden oder mehrere Teile sein.

Die Materialkenngröße kann vor der Herstellung des Drehmomentübertragungselements an dem Rohling, aus dem das Drehmomentübertragungselement und/oder die Versagensstelle hergestellt wird, ermittelt werden. Die Materialkenngröße kann auch während der Herstellung des Drehmomentübertragungselements vor einer Herstellung oder Fertigstellung der Versagensstelle an dem Drehmomentübertragungselement ermittelt werden.

Insbesondere wird eine Größe einer Bruchfläche, an der die Versagensstelle des Drehmomentübertragungselements bei Überschreiten des planmäßigen Drehmoments zerstört wird, an die zuvor ermittelte Materialkenngröße des Drehmomentübertragungselements angepasst. Beispielsweise kann eine Tiefe einer umlaufenden Nut, die die Versagensstelle des Drehmomentübertragungselements bildet, an die Materialkenngröße des Drehmomentübertragungselements angepasst werden. Eine andere Möglichkeit ist eine Anpassung eines radialen Abstands der Versagensstelle von einer Drehachse des Drehmomentübertragungselements an die zuvor ermittelte Materialkenngröße des Drehmomentübertragungselements, das heißt beispielsweise bei einer höheren Festigkeit des Drehmomentübertragungselements oder jedenfalls seiner Versagensstelle wird die Versagensstelle näher an der Drehachse vorgesehen und umgekehrt. Die beiden Möglichkeiten können kombiniert werden. Andere Möglichkeiten zur Anpassung der Geometrie des Drehmomentübertragungselements beziehungsweise der Versagensstelle an die Materialkenngröße des Drehmomentübertragungselements sind nicht ausgeschlossen.

Als Materialkenngröße, die zum Kalibrieren der Versagensstelle des Drehmomentübertragungselements ermittelt wird, kann beispielsweise eine Zugfestigkeit, eine Scherfestigkeit, eine Kerbschlagzähigkeit oder eine Härte des Rohlings, aus dem das Drehmomentübertragungselement hergestellt wird, oder des Drehmomentübertragungselements ermittelt werden. Es können auch mehrere beziehungsweise verschiedene Materialkenngrößen zum Kalibrieren ermittelt werden.

Der Anspruch 4 ist auf ein System aus einer Vielzahl von Drehmomentübertragungselementen mit jeweils einer Versagensstelle oder auch mehreren Versagensstellen gerichtet, die innerhalb einer vorgegebenen Toleranz alle dasselbe planmäßige Drehmoment übertragen und bei Überschreiten des planmäßigen Drehmoments versagen. Die Drehmomentübertragungselemente des Systems können, mit Ausnahme ihrer Versagensstellen und/oder der Lasteinleitungsstellen, an denen mit einem Werkzeug das Drehmoment auf das Drehmomentübertragungselement übertragen wird, und der Materialkenngrößen, im Rahmen typischer Fertigungstoleranzen identisch sein. Insbesondere weisen sie eine identische Geometrie auf und bestehen insbesondere hinsichtlich seiner Bezeichnung oder Spezifikation aus dem gleichen Werkstoff. Allerdings sind verschiedene Drehmomentübertragungselemente des Systems aus verschiedenen Rohlingen hergestellt, weswegen ihre Materialkennwerte im Rahmen typischer Herstellungsschwankungen abweichen können. Abhängig von einem oder mehreren Materialkennwerten, die vor oder während der Herstellung der Drehmomentübertragungselemente ermittelt werden, weichen die Geometrien an den Versagensstellen und/oder Lasteinleitungsstellen der Drehmomentübertragungselemente voneinander ab, um mit kleiner Toleranz der Drehmomentübertragungselemente des Systems dasselbe planmäßige Drehmoment zu erreichen, bei dessen Überschreiten die Versagensstellen der Drehmomentübertragungselemente versagen. "Kleine Toleranz" meint hier eine Toleranz, die gegenüber der Toleranz in den Materialkennwerten verringert ist und vorzugsweise nicht mehr als ±5 % und insbesondere nicht mehr als ±4 % beträgt.

Die Drehmomentübertragungselemente des Systems sind insbesondere Muttern, Schrauben oder Ankerschäfte von beispielsweise Spreizankern, deren Versagensstellen, insbesondere wie oben erläutert kalibriert sind.

Weiterer Gegenstand der Erfindung sind Befestigungselemente wie beispielsweise Muttern, Schrauben oder Ankerschäfte, die ein Drehmomentübertragungselement aufweisen, das wie vorstehend erläutert kalibriert worden ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

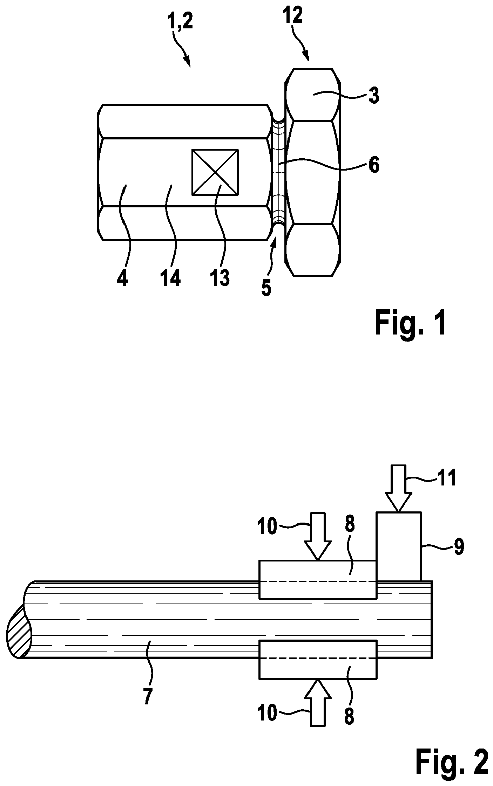

Die Erfindung wird nachfolgend anhand in der Zeichnung dargestellter Ausführungsbeispiele näher erläutert. Die Figuren 1, 3 und 4 zeigen drei Drehmomentübertragungselemente mit erfindungsgemäß kalibrierten Versagensstellen. Figur 2 zeigt einen Rohling, aus dem die Drehmomentübertragungselemente hergestellt sind beziehungsweise werden.

Grundsätzlich sind in den Figuren gleiche Teile mit gleichen Bezugszahlen versehen.

Das in Figur 1 dargestellte, erfindungsgemäße Befestigungselement 1 ist eine Schraubenmutter 2 mit zwei gleichachsig und axial hinter- beziehungsweise nebeneinander angeordneten Außensechskanten 3, 4 mit zwei verschiedenen Schlüsselweiten. Im Ausführungsbeispiel ist ein erster der beiden Außensechskante 3 mit einer größeren Schlüsselweite axial kürzer als der zweite Außensechskant 4, der im Ausführungsbeispiel eine kleinere Schlüsselweite aufweist.

Die beiden Außensechskante 3, 4 bilden Lasteinleitungsstellen zu einem durch Formschluss drehfesten Ansetzen eines nicht dargestellten Drehantriebswerkzeugs wie beispielsweise einer Innensechskantnuss oder eines Werkzeugschlüssels wie beispielsweise eines Maulschlüssels oder eines Ringschlüssels.

Zwischen den beiden Außensechskanten 3, 4 weist das Befestigungselement 1 eine umlaufende Nut 5 auf, welche eine Versagensstelle 6 bildet.

Ein axiales Durchgangsloch des als Schraubenmutter 2 ausgeführten, erfindungsgemäßen Befestigungselements 1 weist nur innerhalb des zweiten Außensechskants 4 ein in der Zeichnung nicht sichtbares Mutterngewinde auf und ist innerhalb des ersten Außensechskants 3 gewindelos. In einem gewindelosen Abschnitt weist das axiale Durchgangsloch des Befestigungselements 1 einen Durchmesser auf, der mindestens so groß wie ein Außendurchmesser des Mutterngewindes ist, so dass der gewindelose Abschnitt des axialen Durchgangslochs des Befestigungselements 1 nicht in Eingriff mit einem nicht dargestellten Außen- oder Schraubengewinde gelangt, das in das Befestigungselement 1 geschraubt oder auf das das Befestigungselement 1 geschraubt wird.

Vor einer Herstellung des Befestigungselements 1 oder spätestens bei einer Herstellung oder Fertigstellung der Versagensstelle 6 wird eine Materialkenngröße eines Rohlings 7, aus dem das Befestigungselement 1 hergestellt wird, ermittelt. Insbesondere wird eine Festigkeitskenngröße des Rohlings 7 ermittelt. Möglich ist beispielsweise die Ermittlung einer Zugfestigkeit oder Härte des Rohlings 7. In Figur 2 wird eine Scherfestigkeit des Rohlings 7 ermittelt, der im Ausführungsbeispiel eine Rundstange ist. Der Rohling 7 wird zwischen zwei Spannbacken 8 festgespannt und mit einem Scherstempel 9 abgeschert. Die Pfeile an den beiden Spannbacken 8 symbolisieren eine Spannkraft 10 und der Pfeil an dem Scherstempel 9 ein Scherkraft 11.

Aus dem Rohling 7 werden danach eine Vielzahl Befestigungselemente 1 hergestellt. Eine Tiefe oder allgemein ausgedrückt eine Geometrie der die Versagensstelle 6 bildenden Nut 5 wird in Abhängigkeit von der ermittelten Materialkenngröße, im Beispiel also in Abhängigkeit von der Scherfestigkeit des Rohlings 7, aus dem die Befestigungselemente 1 hergestellt werden, angepasst, derart, dass die Versagensstelle 6 ein Drehmoment bis zur Höhe eines planmäßigen Drehmoments zwischen den beiden Außensechskanten 3, 4 überträgt. Wird das planmäßige Drehmoment überschritten, versagt die Versagensstelle 6 des Befestigungselements 1, im Ausführungsbeispiel wird das Befestigungselement 1 an der Nut 5 abgeschert und die Versagensstelle 6 dadurch zerstört.

Weist der Rohling 7 eine höhere Festigkeit auf, wird die die Versagensstelle 6 bildende Nut 5 tiefer ausgeführt als bei einem Rohling 7 mit niedrigerer Festigkeit. Weil die Festigkeit, im Ausführungsbeispiel die Scherfestigkeit und allgemein eine Materialkenngröße des Rohlings 7 ermittelt wird, lässt sich das planmäßige Drehmoment mit einer kleinen Toleranz, die nicht größer als eine Drehmomenttoleranz eines Drehmomentschlüssels ist, und die beispielsweise nicht mehr als ±5 % und insbesondere weniger als ±4 % beträgt, einstellen.

Die Her- oder Fertigstellung der Geometrie der Versagensstelle 6, im Ausführungsbeispiel die Tiefe der umlaufenden Nut 5 zwischen den beiden Außensechskanten 3, 4, in Abhängigkeit von der Festigkeit oder allgemein eines Materialkennwerts des Rohlings 7, aus dem das Befestigungselement 1 hergestellt ist oder wird, kann auch als "Kalibrieren" der Versagensstelle 6 beziehungsweise eines Drehmomentübertragungselements 12 des Befestigungselements 1 aufgefasst werden und bildet ein erfindungsgemäßes Verfahren. Mit der Tiefe der Nut 5 wird im beschriebenen Ausführungsbeispiel der Erfindung eine Größe einer Bruchfläche der Versagensstelle 6 an die ermittelte Festigkeit beziehungsweise Festigkeitskenngröße des Rohlings 7 angepasst. Die Bruchfläche ist im Ausführungsbeispiel eine kreisringförmige Querschnittsfläche des Befestigungselements 1 am Grund der Nut 5. Wird das Befestigungselement 1 auf ein nicht dargestelltes Schrauben- oder Außengewinde geschraubt und durch Drehantrieb an dem ersten Außensechskant 3 mit der größeren Schlüsselweite festgezogen, schert der erste Außensechskant 3 bei Überschreiten des planmäßigen Drehmoments ab, so dass sich das Befestigungselement 1 ohne Zuhilfenahme eines Drehmomentschlüssels mit dem planmäßigen Drehmoment mit einer Drehmomenttoleranz von beispielsweise ±5 %, ±4 % oder weniger festziehen lässt.

Der erste Außensechskant 3, in dem das Befestigungselement 1 kein Mutterngewinde aufweist, bildet ein Drehmomentübertragungselement 12, das über die Versagensstelle 6 mit dem Befestigungselement 1 verbunden ist. In dem in Figur 1 dargestellten und vorstehend beschriebenen Ausführungsbeispiel sind das als Schraubenmutter ausgeführte Befestigungselement 1 und das Drehmomentübertragungselement 12 einstückig miteinander.

Eine Alternative zur Ermittlung der Scherfestigkeit ist beispielsweise die Ermittlung einer Kerbschlagzähigkeit oder eine Härteprüfung zur Ermittlung eines Festigkeitskennwerts oder allgemein eines Materialkennwerts, in dessen Abhängigkeit die Geometrie der Versagensstelle 6 erfindungsgemäß gefertigt wird. Figur 1 zeigt einen Abdruck 13 eines nicht dargestellten Prüfkörpers mit einer pyramidenförmigen Spitze in einer Schlüsselfläche 14 des ersten Außensechskants 3 des Befestigungselements 1. Die Spitze des nicht dargestellten Prüfkörpers ist zur Ermittlung der Härte des Werkstoffs des Befestigungselements 1 in das Befestigungselement 1 gedrückt worden. Der Vorteil dieser Art der Ermittlung eines Materialkennwerts ist, dass der Materialkennwert an jedem Befestigungselement 1 und in unmittelbarer Nähe der Versagensstelle 6 ermittelt werden kann. Ein Nachteil ist der Aufwand, wenn der Materialkennwert an jedem Befestigungselement 1 ermittelt wird. Der Materialkennwert kann aber auch an dem Rohling 7 oder an einem oder einigen anstatt an allen aus einem Rohling 7 hergestellten Befestigungselementen 1 ermittelt werden.

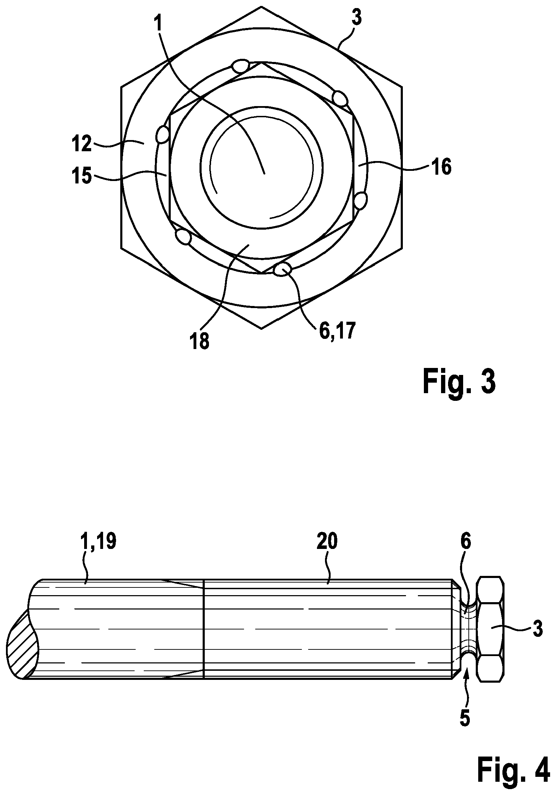

Figur 3 zeigt eine Ausführung der Erfindung, bei der das Befestigungselement 1 und das Drehmomentübertragungselement 12 verschiedene Teile sind. Das Befestigungselement 1 ist eine Schraube mit einem sechseckigen Schraubenkopf 18. Das Drehmomentübertragungselement 12 aus Figur 3 erinnert an eine Verschlussmutter, weist allerdings kein Gewinde auf. Das Drehmomentübertragungselement 12 weist einen ersten Außensechskant 3, der einen Werkzeugsitz zu einem durch Formschluss drehfesten Ansetzen eines nicht dargestellten Drehantriebswerkzeugs bildet, eine koaxiale, zylindrische Senkung 15 und eine Stirnwand 16 an einer Stirnseite auf.

An einem Innenumfang der Senkung 15 weist das Drehmomentübertragungselement 12 nach innen abstehende Mitnehmer 17 auf, die gleichmäßig über den Umfang verteilt angeordnet sind. Für den sechseckigen Schraubenkopf 18 mit einem zweiten Außensechskant 4 weist das Drehmomentübertragungselement 12 im Ausführungsbeispiel sechs Mitnehmer 17 auf. Für einen Schraubenkopf mit mehr oder weniger Ecken weist das Drehmomentübertragungselement 12 entsprechend mehr oder weniger Mitnehmer 17 auf, wobei nicht für jede Ecke ein Mitnehmer 17 vorhanden sein muss. Notwendig ist mindestens ein Mitnehmer 17.

Das Drehmomentübertragungselement 12 wird auf das Befestigungselement 1, im Ausführungsbeispiel auf den Schraubenkopf 18 der das Befestigungselement 1 bildenden Schraube aufgesetzt, so dass durch einen Drehantrieb des Drehmomentübertragungselements 12 das Befestigungselement 1 drehend antreibbar ist. Die Mitnehmer 17 übertragen ein Drehmoment von dem Drehmomentübertragungselement 12 auf das Befestigungselement 1. Übersteigt bei einem Festziehen des Befestigungselements 1 das Drehmoment das planmäßige Drehmoment, verformen sich die Mitnehmer 17 so weit, dass sie in Umfangsrichtung an den Ecken des Schraubenkopfs 18 vorbei treten. Dadurch ist das von dem Drehmomentübertragungselement 12 auf den Schraubenkopf 18 der das Befestigungselement 1 bildenden Schraube maximal übertragbare Drehmoment auf das planmäßige Drehmoment begrenzt. Außer verformt können die Mitnehmer 17 auch abgeschert oder in anderer Weise von dem Drehmomentübertragungselement 12 getrennt oder zerstört werden. Die Mitnehmer 17 bilden erfindungsgemäße Versagensstellen 6 des Drehmomentübertragungselements 12 aus Figur 3.

Zum erfindungsgemäßen Kalibrieren der Versagensstellen 6 des Drehmomentübertragungselements 12 aus Figur 3 wird, wie oben zu Figur 1 beschrieben, eine Materialkenngröße eines Rohlings 7, aus dem das Drehmomentübertragungselement 12 hergestellt ist oder wird, ermittelt und es werden Form und/oder Größe der die Versagensstellen 6 bildenden Mitnehmer 17 so angepasst, dass sie versagen, wenn das planmäßige Drehmoment überschritten wird. Unter "Versagen" ist in diesem Fall eine Verformung der Mitnehmer 17 zu verstehen, derart, dass sie die Ecken des Schraubenkopfs 18 überwinden und beim Drehen daran vorbeilaufen.

Zum Kalibrieren werden eine axiale Höhe, ein radialer Überstand nach innen und/oder eine Form der Mitnehmer 17 so bearbeitet, dass sie maximal das planmäßige Drehmoment auf den Schraubenkopf 18 übertragen. Die Mitnehmer 17 können beispielsweise spanend bearbeitet oder umgeformt werden, wobei insbesondere eine spanende Bearbeitung eine Herstellung mit sehr geringen Fertigungstoleranzen ermöglicht.

Als Materialkenngröße wird ebenfalls wie oben zu Figur 1 beschrieben insbesondere eine Festigkeitskenngröße, beispielsweise eine Zugfestigkeit oder eine Scherfestigkeit des Rohlings 7 oder eine Kerbschlagzähigkeit oder eine Härte des Rohlings 7 oder des Drehmomentübertragungselements 12, ermittelt.

Figur 4 zeigt einen Ankerschaft 19 eines im Übrigen nicht dargestellten Ankers als Beispiel eines weiteren Befestigungselements 1. Der Ankerschaft 19 weist ein Außengewinde 20 und gleichachsig zum Ankerschaft 19 und zum Außengewinde 20 einen Außensechskant 3 an einem Ende des Ankerschafts 19 auf. Auch bei dieser Ausführung der Erfindung bildet der erste Außensechskant 3 einen Werkzeugsitz zu einem durch Formschluss drehfesten Ansetzen eines nicht dargestellten Drehantriebswerkzeugs.

Zwischen dem Außengewinde 20 und dem ersten Außensechskant 3 weist der Ankerschaft 19 wie die Schraubenmutter 2 aus Figur 1 eine umlaufende Nut 5 auf, die eine Versagensstelle 6 bildet. Bei Überschreiten des planmäßigen Drehmoments schert der erste Außensechskant 3 ab, wobei die Versagensstelle 6 versagt. Die Kalibrierung der Versagensstelle 6 erfolgt wie oben zu Figur 1 beschrieben.

Eine Vielzahl der in Figuren 1, 3 oder 4 gezeigten, erfindungsgemäßen Drehmomentübertragungselemente 12 bilden ein erfindungsgemäßes System. Die Drehmomentübertragungselemente 12 sind vorzugsweise aus mehreren Rohlingen 7 hergestellt und weisen deswegen trotz gleicher Werkstoffbezeichnung oder gleicher Werkstoffspezifikation teilweise verschiedene Materialkenngrößen und Festigkeiten auf. Trotzdem ist durch die oben beschriebene, erfindungsgemäße Kalibrierung das planmäßige Drehmoment aller Befestigungselemente 1 eines Systems innerhalb kleiner Toleranzen, insbesondere von nicht mehr als ±5 %, vorzugsweise von nicht mehr als ±4 %, gleich. Die Drehmomentübertragungselemente 12 eines Systems unterscheiden sich dementsprechend durch die Geometrie ihrer Versagensstelle 6. Die geometrischen Abweichungen der Versagensstelle 6 einzelner Drehmomentübertragungselemente 12 des Systems sind somit größer als die üblichen Fertigungstoleranzen. In Figuren 1 und 4 unterscheidet sich die Tiefe der umlaufenden Nut 5 beziehungsweise ein Durchmesser der Nut 5 an ihrem Grund, ansonsten ist die Geometrie der Drehmomentübertragungselemente 12 eines Systems im Rahmen von Fertigungstoleranzen gleich. In Figur 3 unterscheidet sich eine Größe und/oder eine Form der Mitnehmer 17 der Drehmomentübertragungselemente 12 eines Systems.

### Bezugszeichenliste

- 1: Befestigungselement
- 2: Schraubenmutter
- 3: erster Außensechskant
- 4: zweiter Außensechskant
- 5: Nut
- 6: Versagensstelle
- 7: Rohling
- 8: Spannbacken
- 9: Scherstempel
- 10: Spannkraft
- 11: Scherkraft
- 12: Drehmomentübertragungselement
- 13: Abdruck
- 14: Schlüsselfläche
- 15: Senkung
- 16: Stirnwand
- 17: Mitnehmer
- 18: Schraubenkopf
- 19: Ankerschaft
- 20: Außengewinde

## Patentansprüche

1. Verfahren zum Kalibrieren einer Versagensstelle (6) eines Drehmomentübertragungselements (12) zum Aufbringen eines planmäßigen Drehmoments auf ein Befestigungselement, **dadurch gekennzeichnet, dass** vor oder während einer Herstellung des Drehmomentübertragungselements (12) eine Materialkenngröße, insbesondere eine Festigkeitskenngröße, eines zur Herstellung der Versagensstelle (6) des Drehmomentübertragungselements (12) benutzten Rohlings ermittelt und eine Geometrie des Drehübertragungselements (12), insbesondere eine Geometrie der Versagensstelle (6), in Abhängigkeit von der ermittelten Materialkenngröße derart angepasst wird, dass die Versagensstelle (6) ein Drehmoment bis zur Höhe des planmäßigen Drehmoments überträgt und bei einem Überschreiten des planmäßen Drehmoments versagt.

2. Verfahren nach Anspruch 1, **dadurch gekennzeichnet, dass** die Größe einer Bruchfläche, an der die Versagensstelle (6) bei Überschreiten des planmäßigen Drehmoments versagt, an die ermittelte Festigkeitskenngröße angepasst wird.

3. Verfahren nach Anspruch 1 oder 2, **dadurch gekennzeichnet, dass** eine Zugfestigkeit, eine Scherfestigkeit, eine Kerbschlagzähigkeit oder eine Härte des Rohlings (7) als Materialkenngröße zum Kalibrieren der Versagensstelle (6) ermittelt wird.

4. System aus einer Vielzahl von Drehmomentübertragungselementen (12), die jeweils eine Versagensstelle (6) aufweisen, wobei jede der Versagensstellen (6) derart geometrisch gestaltet ist, dass sie ein Drehmoment bis zur Höhe eines planmäßigen Drehmoments überträgt und bei einem Überschreiten des planmäßen Drehmoments versagt, **dadurch gekennzeichnet, dass** sich die einzelnen Lasteinleitungs- und/oder Versagensstellen (6) geometrisch in Abhängigkeit einer Materialkenngröße voneinander unterscheiden.

5. System nach Anspruch 4, **dadurch gekennzeichnet, dass** das System Schraubenmuttern (2), Schrauben oder Ankerschäfte (19) mit im Wesentlichen gleicher Geometrie und gleicher Werkstoffbezeichnung/Werkstoffspezifikation als Drehmomentübertragungselemente (12) aufweist.

6. System nach Anspruch 4 oder 5, **dadurch gekennzeichnet, dass** das die Versagensstellen (6) und/oder Lasteinleitungsstellen der Drehmomentübertragungselemente (12) nach dem Verfahren nach einem oder mehreren der Ansprüche 1 bis 3 kalibriert sind.

7. System nach einem der Ansprüche 4 bis 6, **dadurch gekennzeichnet, dass** das Drehmoment, bei dessen Überschreiten die Versagensstelle (6) eines der Drehmomentübertragungselemente (12) versagt, um nicht mehr als ±5 % und vorzugsweise nicht mehr als ±4 % vom planmäßigen Drehmoment abweicht.

8. Befestigungselement mit einem Drehmomentübertragungselement (12), **dadurch gekennzeichnet, dass** das Drehmomentübertragungselement (12) eine Versagensstelle (6) aufweist, die nach einem der Ansprüche 1 bis 3 kalibriert ist.

9. Befestigungselement nach Anspruch 8, **dadurch gekennzeichnet, dass** das Drehmomentübertragungselement (12) eine Schraubenmutter (2), eine Schraube oder einen Ankerschaft (19) aufweist.

10. Befestigungselement nach Anspruch 8 oder 9, **dadurch gekennzeichnet, dass** das Drehmoment, bei dessen Überschreiten die Versagensstelle (6) des Drehmomentübertragungselements (12) versagt, um nicht mehr als ±5 % und vorzugsweise nicht mehr als ±4 % vom planmäßigen Drehmoment abweicht.
